# EUROPÄISCHE PATENTSCHRIFT

(11) **EP 3 915 189 B1**
(45) Veröffentlichungstag und Bekanntmachung des Hinweises auf die Patenterteilung: **11.09.2024**
(21) Anmeldenummer: 20702436.5
(22) Anmeldetag: 27.01.2020
(51) Int. Cl.: H02N 2/02

(54) **ELEKTROMECHANISCHER LINEARANTRIEB**
ELECTROMECHANICAL LINEAR DRIVE
ENTRAÎNEMENT LINÉAIRE ÉLECTROMÉCANIQUE

(30) Priorität: 25.01.2019 DE 102019200943
(43) Veröffentlichungstag der Anmeldung: 01.12.2021
(73) Patentinhaber: Physik Instrumente (PI) GmbH & Co. KG, 76228 Karlsruhe (DE)
(72) Erfinder: HÜBNER, Reinhard, 76337 Waldbronn (DE); BOCSKAI, Dominik, 76473 Iffezheim (DE)
(74) Vertreter: Grünecker Patent- und Rechtsanwälte PartG mbB
(86) Internationale Anmeldenummer: PCT/EP2020/051856
(87) Internationale Veröffentlichungsnummer: WO 2020/152365

(56) Entgegenhaltungen:
- EP-A1- 2 590 315
- EP-A2- 1 983 585
- DE-B3- 102014 205 280
- US-A1- 2002 030 422

## Beschreibung

Die vorliegende Erfindung betrifft einen elektromechanischen Linearantrieb, insbesondere zur präzisen Positionierung eines anzutreibenden Elements.

Insbesondere betrifft die vorliegende Erfindung einen Linearantrieb, der eine elektromechanische Antriebseinheit, ein damit gekoppeltes Übertragungselement und ein anzutreibendes Element aufweist, welches durch Deformationsbewegungen der elektromechanischen Antriebseinheit aufgrund eines Haftgleiteffekts entlang des Übertragungselements bewegbar ist.

Antriebe dieser Art sind aus der DE 10 2005 026 708 B4, JP H 08149860 und DE 10 2014 205 280 B3 bekannt.

Die DE 10 2005 026 708 B4 offenbart einen Positionierer, bei dem eine Baueinheit über einen Haftgleitantrieb entlang einer in einem Gehäuse aufgenommenen und von einem Aktuator betätigten Translationsachse verschiebbar ist. Die Translationsachse ist dabei vollständig im Gehäuse aufgenommen und über Festkörpergelenke mit dem Gehäuse gekoppelt, um die Translationsachse bzw. den Aktuator gegen Drehung und seitlichen Versatz zu sichern. Ein Einsatz von Festkörpergelenken, die über Klebung fest mit den Endflächen der Translationsachse verbunden werden müssen, wirkt sich hier nachteilig auf Produktionskosten und Montageaufwand aus.

Die JP H 08149860 offenbart einen ähnlichen Antrieb, dessen Gehäuse eine Aussparung aufweist, in der eine Trägerachse eines anzutreibenden Elements angeordnet ist, und eine weitere Aussparung, in der eine elektromechanische Antriebseinheit angeordnet ist. Dementsprechend weist das Gehäuse eine Länge auf, die es ermöglicht, die Trägerachse in ihrer Längserstreckung und die elektromechanische Antriebseinheit vollständig aufzunehmen. Neben der großen Längsdimension des Gehäuses, ist auch die eingeschränkte Zugänglichkeit zum anzutreibenden Element aufgrund des umgebenden Gehäuses bei dieser Konfiguration nachteilig. Insbesondere ist es nachteilig, dass auch der Stellweg des anzutreibenden Elements aufgrund des umgebenden Gehäuses begrenzt ist.

Die DE 10 2014 205280 B3 offenbart einen elektromechanischen Linearantrieb gemäß der Präambel des unabhängigen Anspruchs 1.

Im Hinblick auf den oben genannten Stand der Technik ist es daher die Aufgabe der vorliegenden Erfindung, einen elektromechanischen Linearantrieb in vereinfachter und kompakter Konfiguration bereitzustellen, der sich folglich durch niedrige Produktionskosten und geringen Montageaufwand auszeichnet sowie eine uneingeschränkte Zugänglichkeit zum anzutreibenden Element und einen erweiterten Stellweg des anzutreibenden Elements ermöglicht.

Die vorliegende Aufgabe wird gelöst durch einen elektromechanischen Linearantrieb gemäß Anspruch 1. Dieser umfasst ein Gehäuse, eine elektromechanische Antriebseinheit, ein mit der elektromechanischen Antriebseinheit gekoppeltes Übertragungselement, ein mit dem Übertragungselement in Friktionskontakt stehendes anzutreibendes Element, wobei das Übertragungselement an wenigstens zwei Lagerstellen gegenüber dem Gehäuse gelagert ist und das anzutreibende Element an einer Eingriffsstelle außerhalb aller Lagerstellen mit dem Übertragungselement in Friktionskontakt steht. Dadurch, dass sich die Stelle, an der sich das anzutreibende Element mit dem Übertragungselement in Eingriff befindet, außerhalb der Lagerstellen befindet, kann eine einfache und kompakte Konfiguration des Linearantriebs mit uneingeschränkter Zugänglichkeit zum anzutreibenden Element gewährleistet werden. Weiterhin ist der Stellweg des anzutreibenden Elements nicht auf den Abstand zwischen den Lagerstellen beschränkt.

Zudem sieht die Erfindung vor, dass ein erster Abschnitt des Übertragungselements, der sich zwischen den Lagerstellen befindet, innerhalb des Gehäuses verläuft und/oder ein zweiter Abschnitt des Übertragungselements, der sich außerhalb aller Lagerstellen befindet, aus dem Gehäuse herausragt. Dadurch liegt der Stellweg des anzutreibenden Elements außerhalb des Gehäuses, wodurch dieser nicht auf die Dimensionen des Gehäuses beschränkt ist.

Gemäß der Erfindung ist die elektromechanische Antriebseinheit in dem Gehäuse angeordnet und bildet eine der Lagerstellen des Übertragungselements. Damit wird in der elektromechanischen Antriebseinheit eine Funktionsvereinigung hinsichtlich Antrieb und Lagerung des Übertragungselements erreicht.

Bevorzugte Ausführungsformen sind Gegenstände der Unteransprüche.

Es kann von Nutzen sein, wenn der elektromechanische Linearantrieb ein Führungselement umfasst, das eine der Lagerstellen des Übertragungselements bildet, wobei das Führungselement das Übertragungselement vorzugsweise in axialer Richtung verschieblich lagert, wobei das Führungselement bevorzugt als Buchse ausgeführt ist, durch welche das Übertragungselement hindurchragt. Durch diese Konfiguration wird eine Gleitlagerung des Übertragungselements bereitgestellt.

Es kann weiterhin von Nutzen sein, wenn das Führungselement einen Teil aufweist, der sich innerhalb des Gehäuses befindet, und einen Teil, der sich außerhalb des Gehäuses befindet. Durch diese Aufteilung können die jeweiligen Teile des Führungselements individuell auf ihre spezielle Funktion abgestimmt werden. Während der Teil, der sich im Gehäuse befindet, eine gute Anbindung an das Gehäuse ermöglichen muss, kann der Teil, der sich außerhalb des Gehäuses befindet, insbesondere auf die Führung des Übertragungselements abgestimmt werden.

Es kann sinnvoll sein, wenn der elektromechanische Linearantrieb eine Vorspanneinrichtung umfasst, die konfiguriert ist, die elektromechanische Antriebseinheit gegen das Gehäuse, vorzugsweise gegen eine Innenfläche des Gehäuses, vorzuspannen, wobei die Vorspanneinrichtung bevorzugt in das Gehäuse einschraubbar ist, und besonders bevorzugt eine Membranfeder umfasst. Durch diese Konfiguration kann eine hohe Vorspannungskraft optimal auf die elektromechanische Antriebseinheit aufgebracht werden, wodurch der Arbeitsbereich der Antriebseinheit eingestellt werden kann.

Es kann sich als sinnvoll erweisen, wenn der elektromechanische Linearantrieb ein fest mit dem Übertragungselement verbundenes Zwischenelement umfasst, das zumindest abschnittsweise zwischen dem Übertragungselement und der elektromechanischen Antriebseinheit angeordnet ist, vorzugsweise derart, dass die Vorspannkraft der Vorspanneinrichtung über das Zwischenelement auf die elektromechanische Antriebseinheit aufbringbar ist. Da das Zwischenelement die Funktion eines Adapters übernimmt, können Übertragungselemente mit verschiedenen Durchmessern oder Querschnittformen mit derselben Antriebseinheit gekoppelt werden.

Es kann nützlich sein, wenn die elektromechanische Antriebseinheit aus einem piezoelektrischen oder einem elektrostriktiven oder einem magnetostriktiven Material besteht.

Es kann sich als Vorteil erweisen, wenn die elektromechanische Antriebseinheit eine Ringform oder eine hohlzylindrische Form aufweist und/oder das Übertragungselement stabförmig, vorzugsweise mit kreisrundem Querschnitt, ausgebildet ist, wobei das Zwischenelement bevorzugt konzentrisch zu der elektromechanischen Antriebseinheit angeordnet ist.

Es kann sinnvoll sein, wenn das Zwischenelement mit dem Übertragungselement und/oder mit der elektromechanischen Antriebseinheit stoffschlüssig verbunden ist. Durch Klebung kann eine verlustfreie Anbindung des Übertragungselements an die elektromechanische Antriebseinheit ermöglicht werden. Weiterhin ist durch die Klebeverbindung eine radiale Lagerung des Übertragungselements realisiert.

Es kann sich als praktisch erweisen, wenn das Übertragungselement aus einem härteren Material als das Führungselement gebildet ist, wobei das Übertragungselement vorzugsweise aus Keramik besteht und das Führungselement vorzugsweise einen Kunststoff aufweist und/oder bevorzugt aus einem Kunststoff besteht, wobei der Kunststoff gleitverbessernde und/oder verschleißreduzierende Zusätze aufweist.

Es kann sich überdies als nützlich erweisen, wenn das Übertragungselement mit einer Übermaßpassung durch das Führungselement hindurchragt. Durch die gezielte Wahl der Werkstoffe und der Durchmesser des Übertragungselements und des Führungselements, kann eine spielfreie Führung des Übertragungselements ermöglicht werden.

Es kann nützlich sein, wenn der erste Abschnitt des Übertragungselements kürzer ist als der zweite Abschnitt des Übertragungselements. Dadurch kann ein langer Stellweg des anzutreibenden Elements bei einem kompakten Gehäuse bereitgestellt werden.

Es kann vorteilhaft sein, wenn die elektromechanische Antriebseinheit durch Beaufschlagung mit elektrischen Spannungen zu Deformationsbewegungen anregbar ist, wobei das Übertragungselement den Deformationsbewegungen der elektromechanischen Antriebseinheit folgt, und die daraus resultierenden Bewegungen des Übertragungselements auf das anzutreibende Element übertragbar sind, so dass dieses mit einer definierten Schubkraft entlang der axialen Richtung des Übertragungselements bewegbar ist.

Es kann von Nutzen sein, wenn die von der Vorspanneinrichtung auf die elektromechanische Antriebseinheit aufgebrachte Vorspannkraft mindestens das Zehnfache der auf das anzutreibende Element wirkenden Schubkraft beträgt.

### Begriffe und Definitionen

Der Haftgleiteffekt, oder auch der Stick-Slip-Effekt (von engl. stick "haften" und slip "gleiten"), bezeichnet das Ruckgleiten von gegeneinander bewegten Festkörpern und ist aus dem Stand der Technik bekannt. Dabei umfasst die Verstellung des anzutreibenden Elements entlang des Übertragungselements mittels Haftgleiteffekt eine Haftphase, in welcher das anzutreibende Element mit dem Übertragungselement mittels Haftreibung in Eingriff steht, und eine Gleitphase, in welcher sich das anzutreibende Element relativ zum Übertragungselement bewegt.

Der Begriff Schubkraft bezeichnet die nutzbare Kraft der elektromechanischen Antriebseinheit, die auf ein anzutreibendes Element ausgeübt werden kann.

Der Begriff Blockierkraft bezeichnet die auf die elektromechanische Antriebseinheit wirkende Vorspannkraft, bei der die Antriebseinheit bei Anlegen der maximal möglichen elektrischen Spannung keine Deformation gegenüber dem mechanisch und elektrisch unbelasteten Zustand aufweist.

### Kurze Beschreibung der Figuren

Es zeigen:
Figur 1 eine schematische Darstellung des erfindungsgemäßen Linearantriebs.
Figur 2 eine Querschnittansicht einer erfindungsgemäßen Ausführungsform des Linearantriebs.
Figur 3 eine perspektivische Ansicht des Linearantriebs gemäß Figur 1.
Figur 4 eine Querschnittansicht einer weiteren erfindungsgemäßen Ausführungsform des Linearantriebs.

### Detaillierte Beschreibung der bevorzugten Ausführungsbeispiele

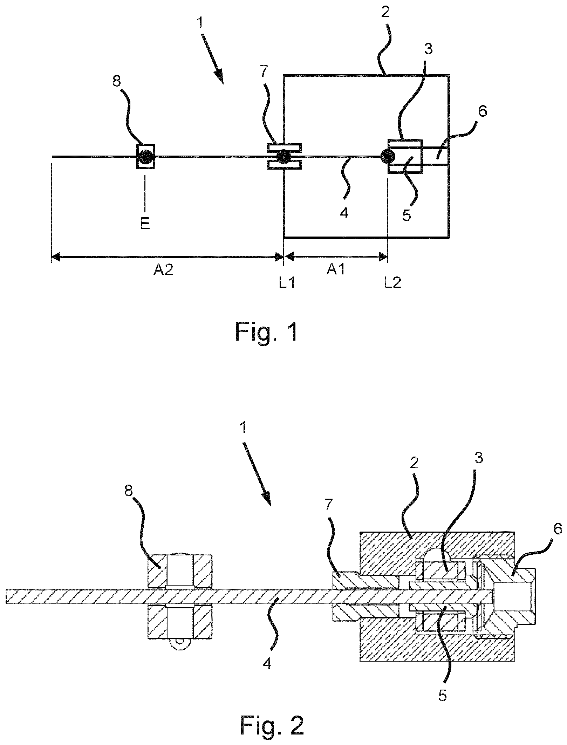

Figur 1 veranschaulicht das Prinzip des erfindungsgemäßen Linearantriebs in einer schematischen Darstellung.

Ein Übertragungselement 4, das mit einer elektromechanischen Antriebseinheit 3 gekoppelt ist, ist gegenüber einem Gehäuse 2 über ein Führungselement 7 bzw. ein mit einer Vorspanneinrichtung 6 einstellbares Zwischenelement 5 an zwei Lagerstellen L1 und L2 gelagert. Ein anzutreibendes Element 8 steht an einer Stelle E (Eingriffsstelle) mit dem Übertragungselement 4 über Friktionskontakt in Eingriff. Die Eingriffsstelle E liegt dabei außerhalb der Lagerstellen L1 und L2.

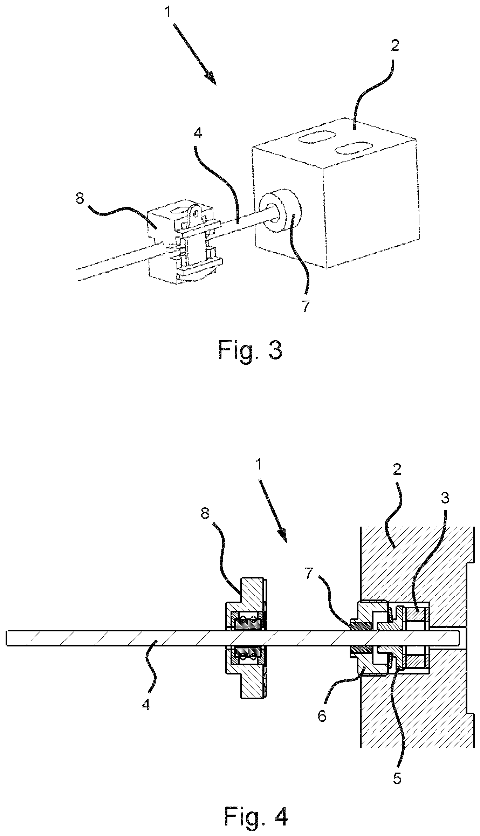

Eine detaillierte Ausführungsform des erfindungsgemäßen Linearantriebs wird nachfolgend mit Bezug auf die Figuren 2 und 3 beschrieben.

Der elektromechanische Linearantrieb 1 beinhaltet das Gehäuse 2, das eine Durchgangsbohrung mit einem Durchmessersprung aufweist. Eine ringförmige elektromechanische Antriebseinheit 3 ist so in dem Gehäuse 2 angeordnet, dass eine Stirnfläche der elektromechanischen Antriebseinheit 3 gegen eine Innenfläche des Gehäuses 2, die aufgrund des Durchmessersprungs der Gehäusebohrung bereitgestellt ist, abgestützt ist. Die Stirnfläche der elektromechanischen Antriebseinheit 3 ist dabei mit der Innenfläche des Gehäuses 2 verklebt. Das Übertragungselement 4, das vorzugsweise stabförmig und mit kreisrundem Querschnitt ausgebildet ist, ist mit der elektromechanischen Antriebseinheit 3 gekoppelt. Das Übertragungselement 4 weist eine derartige Erstreckung in axialer Richtung auf, dass ein Abschnitt A1 des Übertragungselements 4 innerhalb des Gehäuses 2 verläuft und ein anderer, vorzugsweise größerer, Abschnitt A2 des Übertragungselements 4 aus dem Gehäuse 2 herausragt (siehe Figur 1). In der vorliegenden Ausführungsform ist ein hohlzylindrisches Zwischenelement 5 in die Öffnung der ringförmigen elektromechanischen Antriebseinheit 3 eingesetzt, wobei sich ein Bund des Zwischenelements 5 an der anderen Stirnfläche des elektromechanischen Antriebselements 3 abstützt. In bevorzugter Ausführungsform ist das Zwischenelement 5 mit der elektromechanischen Antriebseinheit verklebt. Das Übertragungselement 4 ist so angeordnet, dass es durch die Öffnung des Zwischenelements 5 hindurchragt und ist in bevorzugter Ausführungsform mit dem Zwischenelement 5 verklebt. Damit ist das Übertragungselement 4 fest mit der elektromechanischen Antriebseinheit 3 verbunden.

Elektromechanische Antriebseinheiten werden für einen ordnungsgemäßen Betrieb in der Regel vorgespannt. Durch die Vorspannung wird der Arbeitsbereich der elektromechanischen Antriebseinheit 3 gezielt eingestellt. Insbesondere lässt sich dadurch die Balance der Deformationsbewegungen der elektromechanischen Antriebseinheit 3 einstellen. Dazu ist in der Durchgangsbohrung an einem Ende des Gehäuses 2 eine Vorspanneinrichtung 6 bereitgestellt, die im Wesentlichen durch eine Schraube verkörpert ist. Der entsprechende Abschnitt der Durchgangsbohrung ist dazu mit einem Gewinde versehen, in die Vorspanneinrichtung 6 eingeschraubt werden kann. In der vorliegenden Ausführungsform kann durch die Vorspanneinrichtung 6 eine hohe Vorspannkraft über den Bund am Zwischenelement 5 optimal auf die elektromechanische Antriebseinheit 3 aufgebracht werden. Die Vorspannkraft liegt dabei näherungsweise bei 1/3 der Blockierkraft der elektromechanischen Antriebseinheit 3. Für eine exakte Einstellung der Vorspannkraft umfasst die Vorspanneinrichtung 6 eine Membranfeder, die zwischen der Schraube und dem Bund des Zwischenelements 5 angeordnet ist. Bei der Membranfeder handelt es sich um eine reine Druckfeder, die ausschließlich zur axialen Vorspannung der elektromechanischen Antriebseinheit 3 bereitgestellt ist und nicht zur Lagerung des Übertragungselements 4 beiträgt.

Auf der anderen Seite des Gehäuses 2 ist in die Durchgangsbohrung ein Führungselement 7 in Form einer zylindrischen Buchse eingesetzt. Dabei umfasst das Führungselement 7 einen Teil, der sich innerhalb des Gehäuses 2 befindet und einen Teil, der sich außerhalb des Gehäuses 2 befindet. Bevorzugt ist das Führungselement 7 in das Gehäuse 2 einklebt und/oder eingepresst oder eingeschraubt. Das Übertragungselement 4 ragt durch das das Führungselement 7 hindurch. Dabei ist, zumindest abschnittsweise, bevorzugt an dem Endabschnitt des Führungselements 7, an dem das Übertragungselement 4 aus dem Gehäuse 2 herausragt, eine spielfreie Führung des Übertragungselements 4 durch das Führungselement 7 vorgesehen. Damit entspricht das Führungselement 7 einem Gleitlager, das als eine erste Lagerstelle L1 das Übertragungselement 4 in axialer Richtung verschieblich und senkreckt zur axialen Richtung unverschieblich am Gehäuse 2 lagert. Eine zweite Lagerstelle L2 im Gehäuse 2 ist über die feste Verbindung von Übertragungselement 4 zur elektromechanischer Antriebseinheit 3, die über die Vorspanneinrichtung 6 im Gehäuse 2 fixiert ist, bereitgestellt.

Die oben genannte spielfreie Führung des Übertragungselements 4 in dem Führungselement 7 wird insbesondere durch die Wahl der Werkstoffe und der Durchmesser des Übertragungselements 4 und Führungselements 7 realisiert. Dazu besteht das Übertragungselement 4 aus einem härteren Material als das Führungselement 7. Bevorzugt besteht das Übertragungselement 4 aus einem keramischen Werkstoff und das Führungselement 7 aus einem Kunststoff oder weist zumindest einen Kunststoff auf. Der Kunststoff kann dabei gleitverbessernde und/oder verschleißreduzierende Zusätze aufweisen. Der Außendurchmesser des Übertragungselements 4 weist ein Übermaß gegenüber dem Innendurchmesser des Führungselements 7 auf, wodurch eine entsprechende Presspassung zwischen Übertragungselement 4 und Führungselement 7 vorherrscht. Bevorzugt sind Übertragungselement 4 und Führungselement 7 derart aufeinander abgestimmt, dass die Presspassung in dem Endabschnitt des Führungselements 7 vorherrscht, an dem das Übertragungselement 4 aus dem Führungselement 7 herausragt. Dieser Endabschnitt des Führungselements 7 befindet sich in dem Teil des Führungselements 7, der außerhalb des Gehäuses 2 liegt. Dadurch liegt die Lagerstelle L1 außerhalb des Gehäuses 2. Durch die beschriebene Wahl der Werkstoffe und Durchmesser arbeitet sich das Übertragungselement 4 selbstständig eine spielfreie Führung aus dem Material des Führungselements 7. Die Reibkraft zwischen dem Führungselement 7 und dem Übertragungselement 4, d. h. die axiale Kraft, die zum Durchschieben des Übertragungselements 4 durch das Führungselement 4 aufgewendet werden muss, liegt im Bereich: 0,1 Schubkraft < Reibkraft < Schubkraft.

Der Teil des Führungselements 7, der innerhalb des Gehäuses 2 liegt, ist für die Ausbildung einer definierten Passung nur bedingt geeignet, da beispielsweise im Fall eines eingepressten Führungselements 7 Kräfte von dem Gehäuse 2 auf diesen Teil des Führungselements 7 wirken.

Weiterhin resultiert die Führung des Übertragungselements 4 durch den oben beschriebenen Endabschnitt des Führungselements 7 in einem großen Abstand der Lagerstellen L1 und L2, wobei die auf die Lagerstellen L1 und L2 wirkende Kräfte aufgrund der entsprechenden Hebellängen gering gehalten werden können. Im vorliegenden Ausführungsbeispiel beträgt der Abstand zwischen den Lagerstellen L1 und L2 näherungsweise das Doppelte der axialen Länge der elektromechanischen Antriebseinheit 3.

Durch Beaufschlagung mit elektrischen Spannungen ist die elektromechanische Antriebseinheit 3 zu translatorischen Deformationsbewegungen anregbar, die auf das gekoppelte Übertragungselement 4 übertragen werden. Das anzutreibende Element 8, das an der Eingriffsstelle E auf dem zweiten Abschnitt A2 des Übertragungselements 4, der aus dem Gehäuse 2 herausragt, in Friktionskontakt steht, wird durch die translatorischen Bewegungen des Übertragungselements 4 und den oben beschriebenen Haftgleiteffekt mit einer definierten Schubkraft entlang der axialen Richtung des Übertragungselements 4 verschoben. Durch eine gezielte elektrische Ansteuerung der elektromechanischen Antriebseinheit 3 kann das anzutreibende Element 8 entlang des Übertragungselements 4 exakt positioniert werden.

Die von der Vorspanneinrichtung 6 auf die elektromechanische Antriebseinheit 3 aufgebrachte Vorspannkraft beträgt typischerweise das Zwanzigfache, mindestens jedoch das Zehnfache, der auf das anzutreibende Element 8 wirkenden Schubkraft.

Figur 4 zeigt eine weitere Ausführungsform des Linearantriebs. Der Unterschied zur ersten Ausführungsform besteht im Wesentlichen darin, dass das Führungselement 7 in die Vorspanneinrichtung 6 integriert ist und das Übertragungselement 4 durch die Vorspanneinrichtung 6 hindurchragt. Auf diese Weise kann der elektromechanische Linearantrieb noch kompakter ausgeführt werden. In dieser Ausführungsform entspricht der Abstand der Lagerstellen L1 und L2 näherungsweise der axialen Länge der elektromechanischen Antriebseinheit 3.

### Bezugszeichenliste

- 1: elektromechanischer Linearantrieb
- 2: Gehäuse
- 3: elektromechanische Antriebseinheit
- 4: Übertragungselement
- 5: Zwischenelement
- 6: Vorspanneinrichtung
- 7: Führungselement
- 8: anzutreibendes Element
- A1: erster Abschnitt des Übertragungselements
- A2: zweiter Abschnitt des Übertragungselements
- E: Eingriffsstelle des anzutreibenden Elements mit dem Übertragungselement
- L1: erste Lagerstelle des Übertragungselements
- L2: zweite Lagerstelle des Übertragungselements

## Patentansprüche

1. Elektromechanischer Linearantrieb (1), umfassend
ein Gehäuse (2),
eine elektromechanische Antriebseinheit (3),
ein mit der elektromechanischen Antriebseinheit (3) gekoppeltes Übertragungselement (4),
ein mit dem Übertragungselement (4) in Friktionskontakt stehendes anzutreibendes Element (8), wobei
das Übertragungselement (4) an wenigstens zwei Lagerstellen (L1, L2) gegenüber dem Gehäuse (2) gelagert ist, wobei
das anzutreibende Element (8) an einer Eingriffsstelle (E) außerhalb aller Lagerstellen (L1, L2) mit dem Übertragungselement (4) in Friktionskontakt steht, wobei ein erster Abschnitt (A1) des Übertragungselements (4), der sich zwischen den Lagerstellen (L1, L2) befindet, innerhalb des Gehäuses (2) verläuft und
ein zweiter Abschnitt (A2) des Übertragungselements (4), der sich außerhalb aller Lagerstellen (L1, L2) befindet, aus dem Gehäuse (2) herausragt und wobei die elektromechanische Antriebseinheit (3) in dem Gehäuse (2) angeordnet ist, **dadurch gekennzeichnet, dass** die elektromechanische Antriebseinheit (3) eine der Lagerstellen (L1, L2) des Übertragungselements (4) bildet.

2. Elektromechanischer Linearantrieb nach Anspruch 1 , **dadurch gekennzeichnet, dass** die elektromechanische Antriebseinheit (3) kraftschlüssig in dem Gehäuse (2) angeordnet ist.

3. Elektromechanischer Linearantrieb nach Anspruch 1 oder 2, **dadurch gekennzeichnet, dass** der elektromechanische Linearantrieb (1) ein Führungselement (7) umfasst, das eine der Lagerstellen (L1, L2) des Übertragungselements (4) bildet, wobei das Führungselement (7) das Übertragungselement (4) vorzugsweise in axialer Richtung verschieblich lagert, wobei das Führungselement (7) bevorzugt als Buchse ausgeführt ist, durch welche das Übertragungselement (4) hindurchragt.

4. Elektromechanischer Linearantrieb nach Anspruch 3, **dadurch gekennzeichnet, dass** das Führungselement (7) einen Teil aufweist, der sich innerhalb des Gehäuses (2) befindet, und einen Teil, der sich außerhalb des Gehäuses (2) befindet.

5. Elektromechanischer Linearantrieb nach einem der vorangehenden Ansprüche, **dadurch gekennzeichnet, dass** der elektromechanische Linearantrieb (1) eine Vorspanneinrichtung (6) umfasst, die konfiguriert ist, die elektromechanische Antriebseinheit (3) gegen das Gehäuse (2), vorzugsweise gegen eine Innenfläche des Gehäuses (2), vorzuspannen, wobei die Vorspanneinrichtung (6) bevorzugt in das Gehäuse (2) einschraubbar ist, und besonders bevorzugt eine Membranfeder umfasst.

6. Elektromechanischer Linearantrieb nach einem der vorangehenden Ansprüche, **dadurch gekennzeichnet, dass** der elektromechanische Linearantrieb (1) ein fest mit dem Übertragungselement (4) verbundenes Zwischenelement (5) umfasst, das zumindest abschnittsweise zwischen dem Übertragungselement (4) und der elektromechanischen Antriebseinheit (3) angeordnet ist.

7. Elektromechanischer Linearantrieb nach einem der vorangehenden Ansprüche, **dadurch gekennzeichnet, dass** die elektromechanische Antriebseinheit (3) aus einem piezoelektrischen oder einem elektrostriktiven oder einem magnetostriktiven Material besteht.

8. Elektromechanischer Linearantrieb nach einem der vorangehenden Ansprüche, **dadurch gekennzeichnet, dass** die elektromechanische Antriebseinheit (3) eine Ringform oder eine hohlzylindrische Form aufweist und/oder das Übertragungselement (4) stabförmig, vorzugsweise mit kreisrundem Querschnitt, ausgebildet ist, wobei das Zwischenelement (5) bevorzugt konzentrisch zu der elektromechanischen Antriebseinheit (3) angeordnet ist.

9. Elektromechanischer Linearantrieb nach Anspruch 6, **dadurch gekennzeichnet, dass** das Zwischenelement (5) mit dem Übertragungselement (4) und/oder mit der elektromechanischen Antriebseinheit (3) stoffschlüssig verbunden ist.

10. Elektromechanischer Linearantrieb nach Anspruch 3, **dadurch gekennzeichnet, dass** das Übertragungselement (4) aus einem härteren Material als das Führungselement (7) gebildet ist, wobei das Übertragungselement (4) vorzugsweise aus Keramik besteht und das Führungselement (7) vorzugsweise einen Kunststoff aufweist und/oder bevorzugt aus einem Kunststoff besteht, wobei der Kunststoff gleitverbessernde und/oder verschleißreduzierende Zusätze aufweist.

11. Elektromechanischer Linearantrieb nach Anspruch 10, **dadurch gekennzeichnet, dass** das Übertragungselement (4) mit einer Übermaßpassung durch das Führungselement (7) hindurchragt.

12. Elektromechanischer Linearantrieb nach Anspruch 1, **dadurch gekennzeichnet, dass** der erste Abschnitt (A1) des Übertragungselements (4) kürzer ist als der zweite Abschnitt (A2) des Übertragungselements (4).

13. Elektromechanischer Linearantrieb nach einem der vorangehenden Ansprüche, **dadurch gekennzeichnet, dass** die elektromechanische Antriebseinheit (3) durch Beaufschlagung mit elektrischen Spannungen zu Deformationsbewegungen anregbar ist, wobei das Übertragungselement (4) den Deformationsbewegungen der elektromechanischen Antriebseinheit (3) folgt, und die daraus resultierenden Bewegungen des Übertragungselements (4) auf das anzutreibende Element (8) übertragbar sind, so dass dieses mit einer definierten Schubkraft entlang der axialen Richtung des Übertragungselements (4) bewegbar ist.

14. Elektromechanischer Linearantrieb nach Anspruch 5 und Anspruch 13, **dadurch gekennzeichnet, dass** die von der Vorspanneinrichtung (6) auf die elektromechanische Antriebseinheit (3) aufgebrachte Vorspannkraft mindestens das Zehnfache der auf das anzutreibende Element (8) wirkenden Schubkraft beträgt.

## Claims

1. An electromechanical linear drive (1) comprising
a housing (2),
an electromechanical drive unit (3),
a transmission element (4) coupled to the electromechanical drive unit (3),
a driven element (8) in frictional contact with the transmission element (4), wherein
the transmission element (4) is supported at at least two bearing points (L1, L2) relative to the housing (2), wherein
the driven element (8) is in frictional contact with the transmission element (4) at an engagement position (E) outside all bearing points (L1, four), wherein a first section (A1) of the transmission element (4) located between the bearing points (L1, L2) extends inside the housing (2) and
a second section (A2) of the transmission element (4) located outside all bearing points (L1, L2) protrudes from the housing, and
wherein the electromechanical drive unit (3) is arranged in the housing, **characterized in that** the electromechanical drive unit (3) forms one of the bearing points (L1, L2) of the transmission element (4).

2. The electromechanical linear drive according to claim 1, **characterized in that** the electromechanical drive unit (3) is arranged non-positively in the housing (2).

3. The electromechanical linear drive according to claims 1 or 2, **characterized in that** the electromechanical linear drive (1) comprises a guide element (7) forming one of the bearing points (L1, L2) of the transmission element (4), wherein the guide element (7) preferably supports the transmission element (4) displaceably in the axial direction, and wherein the guide element (7) is preferably configured as a bushing through which the transmission element (4) penetrates.

4. The electromechanical linear drive according to claim 3, **characterized in that** the guide element (7) includes a part located inside the housing (2) and a part located outside the housing (2).

5. The electromechanical linear drive according to any one of the preceding claims, **characterized in that** the electromechanical linear drive (1) comprises a biasing device (6) configured to bias the electromechanical drive unit (3) against the housing (2), preferably against an inner surface of the housing (2), wherein the biasing device (6) preferably can be screwed into the housing (2), and particularly preferably comprises a membrane spring.

6. The electromechanical linear drive according to any one of the preceding claims, **characterized in that** the electromechanical linear drive (1) comprises an intermediate element (5) fixedly connected to the transmission element (4) which is arranged at least in sections between the transmission element (4) and the electromechanical drive unit (3).

7. The electromechanical linear drive according to any one of the preceding claims, **characterized in that** the electromechanical drive unit (3) consists of a piezoelectric or an electrostrictive or a magnetostrictive material.

8. The electromechanical linear drive according to any one of the preceding claims, **characterized in that** the electromechanical drive unit (3) has an annular shape or a hollow cylindrical shape and/or the transmission element (4) is rod-shaped, preferably with a circular cross-section, the intermediate element (5) preferably being arranged concentrically to the electromechanical drive unit (3).

9. The electromechanical linear drive according to claim 6, **characterized in that** the intermediate element (5) is connected to the transmission element (4) and/or to the electromechanical drive unit (3) by means of closure by adhesive force.

10. The electromechanical linear drive according to claim 3, **characterized in that** the transmission element (4) is made of a harder material than the guide element (7), wherein the transmission element (4) preferably consists of ceramics and the guide element (7) preferably includes a plastic and/or preferably consists of a plastic, wherein the plastic includes additives that improve sliding properties and/or reduce wear.

11. The electromechanical linear drive according to claim 10, **characterized in that** the transmission element (4) penetrates through the guide element (7) with an interference fit.

12. The electromechanical linear drive according to claim 1, **characterized in that** the first section (A1) of the transmission element (4) is shorter than the second section (A2) of the transmission element (4).

13. The electromechanical linear drive according to any one of the preceding claims, **characterized in that** the electromechanical drive unit (3) can be excited to deformation movements by application of electrical voltages, wherein the transmission element (4) follows the deformation movements of the electromechanical drive unit (3), and the resulting movements of the transmission element (4) can be transmitted to the element (8) to be driven, so that the latter can be moved with a defined thrust force along the axial direction of the transmission element (4).

14. The electromechanical linear drive according to claim 5 and claim 13, **characterized in that** the biasing force applied to the electromechanical drive unit (3) by the biasing device (6) is at least ten times the thrust force acting on the element (8) to be driven.

## Revendications

1. Actionneur linéaire électromécanique (1), comprenant
un boîtier (2),
une unité d'actionnement électromécanique (3),
un élément de transmission (4) couplé à l'unité d'actionnement électromécanique (3),
un élément à entraîner (8) qui est en contact par friction avec l'élément de transmission (4), dans lequel
l'élément de transmission (4) est monté sur au moins deux points d'appui (L1, L2) par rapport au boîtier (2), dans lequel
l'élément à entraîner (8) est en contact par friction avec l'élément de transmission (4) à un point d'engagement (E) en dehors de tous les points d'appui (L1, L2), dans lequel une première section (A1) de l'élément de transmission (4) qui est située entre les points d'appui (L1, L2) s'étend à l'intérieur du boîtier (2) et une deuxième section (A2) de l'élément de transmission (4) qui est située à l'extérieur de tous les points d'appui (L1, L2) dépasse du boîtier (2), et dans lequel l'unité d'actionnement électromécanique (3) est agencée dans le boîtier (2),
**caractérisé en ce que** l'unité d'actionnement électromécanique (3) forme l'un des points d'appui (L1, L2) de l'élément de transmission (4).

2. Actionneur linéaire électromécanique selon la revendication 1, **caractérisé en ce que** l'unité d'actionnement électromécanique (3) est agencée dans le boîtier (2) par engagement de force.

3. Actionneur linéaire électromécanique selon la revendication 1 ou 2, **caractérisé en ce que** l'actionneur linéaire électromécanique (1) comprend un élément de guidage (7) qui constitue l'un des points d'appui (L1, L2) de l'élément de transmission (4), dans lequel l'élément de guidage (7) supporte de préférence l'élément de transmission (4) de manière mobile en direction axiale, dans lequel l'élément de guidage (7) est de préférence réalisé sous la forme d'une bague à travers laquelle dépasse l'élément de transmission (4).

4. Actionneur linéaire électromécanique selon la revendication 3, **caractérisé en ce que** l'élément de guidage (7) comporte une partie située à l'intérieur du boîtier (2) et une partie située à l'extérieur du boîtier (2).

5. Actionneur linéaire électromécanique selon l'une des revendications précédentes, **caractérisé en ce que** l'actionneur linéaire électromécanique (1) comprend un dispositif de précontrainte (6) qui est configuré pour précontraindre l'unité d'actionnement électromécanique (3) contre le boîtier (2), de préférence contre une surface interne du boîtier (2), dans lequel le dispositif de précontrainte (6) peut de préférence être vissé dans le boîtier (2) et comprend de préférence encore un ressort à diaphragme.

6. Actionneur linéaire électromécanique selon l'une des revendications précédentes, **caractérisé en ce que** l'actionneur linéaire électromécanique (1) comprend un élément intermédiaire (5) qui est connecté fermement à l'élément de transmission (4) et qui est agencé au moins par sections entre l'élément de transmission (4) et l'unité d'actionnement électromécanique (3).

7. Actionneur linéaire électromécanique selon l'une des revendications précédentes, **caractérisé en ce que** l'unité d'actionnement électromécanique (3) est constituée d'un matériau piézoélectrique, électrostrictif ou magnétostrictif.

8. Actionneur linéaire électromécanique selon l'une des revendications précédentes, **caractérisé en ce que** l'unité d'actionnement électromécanique (3) présente une forme annulaire ou une forme cylindrique creuse, et/ou **en ce que** l'élément de transmission (4) présente une forme de barre, de préférence à section circulaire, dans lequel l'élément intermédiaire (5) est de préférence agencé de manière concentrique par rapport à l'unité d'actionnement électromécanique (3).

9. Actionneur linéaire électromécanique selon la revendication 6, **caractérisé en ce que** l'élément intermédiaire (5) est fermement adhéré à l'élément de transmission (4) et/ou à l'unité d'actionnement électromécanique (3).

10. Actionneur linéaire électromécanique selon la revendication 3, **caractérisé en ce que** l'élément de transmission (4) est constitué d'un matériau plus dur que l'élément de guidage (7), dans lequel l'élément de transmission (4) est de préférence constitué de céramique et l'élément de guidage (7) comporte de préférence une matière plastique et/ou est de préférence encore constitué d'une matière plastique, dans lequel la matière plastique comporte des additifs améliorant le glissement et/ou réduisant l'usure.

11. Actionneur linéaire électromécanique selon la revendication 10, **caractérisé en ce que** l'élément de transmission (4) traverse l'élément de guidage (7) avec un ajustement à serrage.

12. Actionneur linéaire électromécanique selon la revendication 1, **caractérisé en ce que** la première section (A1) de l'élément de transmission (4) est plus courte que la deuxième section (A2) de l'élément de transmission (4).

13. Actionneur linéaire électromécanique selon l'une des revendications précédentes, **caractérisé en ce que** l'unité d'actionnement électromécanique (3) peut être stimulée par l'application de tensions électriques pour produire des mouvements de déformation, dans lequel l'élément de transmission (4) suit les mouvements de déformation de l'unité d'actionnement électromécanique (3), et les mouvements résultants de l'élément de transmission (4) peuvent être transférés à l'élément à entraîner (8), de telle sorte que celui-ci puisse être déplacé avec une force de poussée définie en direction axiale de l'élément de transmission (4).

14. Actionneur linéaire électromécanique selon les revendications 5 et 13, **caractérisé en ce que** la force de précontrainte appliquée par le dispositif de précontrainte (6) à l'unité d'actionnement électromécanique (3) est au moins dix fois la force de poussée agissant sur l'élément à entraîner (8).
